# EUROPÄISCHE PATENTSCHRIFT

(11) **EP 2 835 514 B1**
(45) Veröffentlichungstag und Bekanntmachung des Hinweises auf die Patenterteilung: **04.01.2017**
(21) Anmeldenummer: 14178848.9
(22) Anmeldetag: 29.07.2014
(51) Int. Cl.: F02B 29/04, F01P 9/06

(54) **Kühlsystem und zugehöriges Betriebsverfahren**
Cooling system and corresponding operating method
Système de refroidissement et procédé de fonctionnement correspondant

(30) Priorität: 07.08.2013 DE 102013215608
(43) Veröffentlichungstag der Anmeldung: 11.02.2015
(73) Patentinhaber: Mahle International GmbH, 70376 Stuttgart (DE); MAHLE Behr GmbH & Co. KG, 70469 Stuttgart (DE)
(72) Erfinder: Isermeyer, Tobias, 74245 Löwenstein (DE); Wieske, Peter, 70825 Korntal-Münchingen (DE); Dingelstadt, René, 70374 Stuttgart (DE)
(74) Vertreter: BRP Renaud & Partner mbB Rechtsanwälte Patentanwälte Steuerberater

(56) Entgegenhaltungen:
- EP-A1- 0 512 307
- EP-A1- 1 500 802
- EP-A1- 1 902 877
- EP-A2- 0 909 932
- EP-A2- 1 342 892
- DE-A1- 19 859 129
- US-A- 6 006 540

## Beschreibung

Die vorliegende Erfindung betrifft ein Kühlsystem für eine aufgeladene Brennkraftmaschine, vorzugsweise in einem Kraftfahrzeug, mit den Merkmalen des Oberbegriffs des Anspruchs 1. Die Erfindung betrifft außerdem ein Verfahren zum Betreiben eines derartigen Kühlsystems.

Die Druckschrift EP1342892 A2 offenbart ein Kühlsystem gemäß dem Oberbegriff des Anspruchs 1.

Aus der DE 198 59 129 A1 ist ein Kühlsystem für eine aufgeladene Brennkraftmaschine bekannt, das einen Ladeluftkühlkreis und einen Kältekreis umfasst. Im Ladeluftkühlkreis zirkuliert ein flüssiges Niedertemperatur-Kühlmittel. Der Ladeluftkühlkreis weist einen Niedertemperatur-Ladeluftkühler zum Kühlen der Ladeluft und einen Niedertemperatur-Kühlmittelkühler zum Kühlen des Niedertemperatur-Kühlmittels auf. Im Kältekreis zirkuliert dagegen ein Kältemittel. Der Kältekreis weist einen Verdampfer zum Verdampfen des Kältemittels und einen Kondensator zum Kondensieren des Kältemittels auf. Beim bekannten Kühlsystem ist der Verdampfer fluidisch mit dem Ladeluftkühlkreis gekoppelt, so dass die zum Verdampfen des Kältemittels benötigte Wärme dem Niedertemperatur-Kühlmittel entnommen wird. Hierdurch kann die Kühlleistung des Ladeluftkühlkreises verbessert werden.

Ein ähnliches Kühlsystem ist aus der US 6,006,540 bekannt. Dort ist der Verdampfer in einem Vorratsbehälter zur Bevorratung des Niedertemperatur-Kühlmittels angeordnet, wobei dieser Vorratsbehälter seinerseits in einem Zweig des Ladeluftkühlkreises angeordnet ist, der zu einem den Niedertemperatur-Kühlmittelkühler enthaltenden Zweig des Ladeluftkühlkreises parallel geschaltet ist. Mit Hilfe entsprechender Ventilmittel kann nun der Kühlmittelstrom im Ladeluftkühlkreis bedarfsabhängig auf den Niedertemperatur-Kühlmittelkühler und den Vorratsbehälter aufgeteilt werden. Somit lässt sich auch hier zusätzliche Kühlleistung im Ladeluftkühlkreis durch die Kopplung mit dem Kältekreis realisieren.

Durch den Einsatz einer Ladeeinrichtung, beispielsweise eines Abgasturboladers, erfolgt die Aufladung, also Druckerhöhung der Ladeluft, was zu einer Leistungssteigerung der Brennkraftmaschine führt. Mit der Kompression geht dabei zwangsläufig eine Temperaturerhöhung einher. Durch Kühlen der Ladeluft lässt sich die Dichte der Luft erhöhen und damit der Luftmassenstrom vergrößern, der Brennräumen der Brennkraftmaschine zugeführt werden kann. Gleichzeitig lassen sich dadurch verbesserte Schadstoffemissionswerte realisieren. Insbesondere reduziert sich durch Kühlung die Tendenz zur Bildung von Stickoxiden. Durch die Aufladung der Ladeluft kann die Brennkraftmaschine somit eine vergleichsweise hohe Leistung bzw. hohe Lasten realisieren. Für diese oberen Lastzustände, die im Folgenden als "Volllast" bezeichnet werden, gilt allgemein, je stärker die Kühlung der Ladeluft, desto besser für die Leistung und die Schadstoffemission der Brennkraftmaschine.

Allerdings werden Brennkraftmaschinen bei Fahrzeugen nicht permanent in diesen oberen Lastzuständen, also bei Volllast betrieben. Vielmehr gibt es gerade im Stadtverkehr eine Vielzahl von Situationen, in denen die Brennkraftmaschine nur mit geringer Last oder sogar nur mit Grundlast, dem sogenannten "Leerlaufbetrieb" betrieben werden muss. Beispielsweise bei typischen Stop-and-Go-Situationen sowie bei einem Ampelstopp. Bei diesen Betriebszuständen der Brennkraftmaschine im unteren Lastbereich, der im Folgenden vereinfacht als "Teillast" bezeichnet wird, hat sich gezeigt, dass eine intensive Kühlung der Ladeluft kontraproduktiv ist hinsichtlich der Schadstoffemissionen der Brennkraftmaschine sowie hinsichtlich des energetischen Gesamtwirkungsgrads der Brennkraftmaschine. Beispielsweise benötigt die aktive Kühlung der Ladeluft Energie, die von der Brennkraftmaschine hergestellt werden muss. Ferner kann sich eine reduzierte Verträglichkeit gegenüber einer Abgasrückführung einstellen, wenn die Ladeluft bei Teillast zu kalt ist.

Dementsprechend besteht das Bedürfnis, die Ladeluft nur bedarfsabhängig zu kühlen. Idealerweise soll die Ladeluft somit nur bei Volllast gekühlt werden, während sie bei Teillast den Brennräumen der Brennkraftmaschine quasi ungekühlt zugeführt wird. Für den Teillastbetrieb ergeben sich dadurch zusätzliche Vorteile. Da bei ungekühlter Ladeluft bei größerem Volumenstrom eine geringere Luftmasse zu den Brennräumen strömt, kann eine Drosselklappe eines Frischluftsystems, die zum Steuern der den Brennräumen zugeführten Luftmasse dient, weiter geöffnet werden, so dass sich insgesamt die Drosselverluste auf der Frischluftseite reduzieren lassen.

Problematisch hierbei ist, dass im Betrieb der Brennkraftmaschine, insbesondere bei einem Einsatz in einem Kraftfahrzeug, die verschiedenen Betriebszustände, also Teillast und Volllast, sehr kurzfristig aufeinander folgen können. Aus Komfortgründen wird dabei gefordert, dass ein transienter Zustand, der den Übergang von der Teillast zur Volllast definiert, möglichst kurz ist. Die Brennkraftmaschine soll auf eine erhöhte Leistungsanforderung möglichst umgehend reagieren. Gerade bei aufgeladenen Brennkraftmaschinen, die mit einem Abgasturbolader arbeiten, kann dabei das sogenannte "Turboloch" auftreten. Durch aufwendige Maßnahmen innerhalb des Abgasturboladers, wie zum Beispiel durch eine variable Turbinengeometrie und/oder durch ein Waste-Gate-Ventil, kann die Ansprechzeit des Turboladers extrem verbessert werden. Insbesondere benötigt ein moderner Turbolader somit weniger Zeit als ein herkömmliches Kühlsystem, um von der Teillast in die Volllast überführt zu werden. Somit steht zwar in akzeptabler Zeit der erforderliche hohe Ladedruck zur Verfügung, die komprimierte und dadurch erhitzte Ladeluft kann jedoch nicht ausreichend rasch gekühlt werden, so dass die geforderte Leistung der Brennkraftmaschine noch nicht bereitgestellt werden kann. Dies ist erst dann möglich, wenn auch die Ladeluftkühlung ihre volle Leistung entfalten kann.

Es besteht somit das Bedürfnis, für eine aufgeladene Brennkraftmaschine ein Kühlsystem zu schaffen, das einen möglichst kurzen transienten Zustand für den Übergang von Teillast zu Volllast besitzt, um möglichst rasch eine ausreichende Kühlung der Ladeluft realisieren zu können.

Die vorliegende Erfindung beschäftigt sich mit dem Problem, für ein Kühlsystem der eingangs genannten Art sowie für ein zugehöriges Betriebsverfahren eine verbesserte Ausführungsform anzugeben, die sich insbesondere dadurch auszeichnet, dass in möglichst kurzer Zeit von einem Zustand mit reduzierter Kühlung der Ladeluft für einen Teillastbetrieb der Brennkraftmaschine auf einen Zustand mit erhöhter Kühlung der Ladeluft für einen Volllastbetrieb der Brennkraftmaschine umgeschaltet werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Ladeluftkühlkreis und den Kältekreis nicht direkt über den Verdampfer, sondern indirekt, nämlich über einen Kopplungswärmeübertrager miteinander zu koppeln, der hierzu einerseits in einem gesteuerten bzw. mit entsprechenden Ventilmitteln steuerbaren, den Verdampfer umgehenden Verdampferbypass des Kältekreises und andererseits in einem gesteuerten bzw. mit entsprechenden Ventilmitteln steuerbaren Kopplungszweig des Ladeluftkühlkreises angeordnet ist. Über den Kopplungswärmeübertrager wird somit eine fluidisch getrennte, Wärme übertragende Kopplung zwischen dem Ladeluftkühlkreis und dem Kältekreis realisiert. Durch die Anordnung des Kopplungswärmeübertragers in einem Verdampferbypass ist es möglich, den Kältekreis auch dann zu betreiben, wenn eine Wärmeaufnahme aus dem Ladeluftkühlkreis nicht erforderlich ist. Insbesondere eignet sich diese Bauweise dafür, einen am Fahrzeug ohnehin vorhandenen Kältekreis zusätzlich zur Kühlung der Ladeluft zu nutzen. Beispielsweise ist heutzutage nahezu jedes Kraftfahrzeug mit einer Klimaanlage zur Temperierung eines Fahrgastraums ausgestattet, die einen solchen Kältekreis umfasst. Durch die Steuerbarkeit des Verdampferbypasses lässt sich der Kopplungswärmeübertrager einfach bedarfsabhängig zuschalten oder wegschalten. Ebenso sind beliebige Zwischenstellungen möglich, die ein teilweises zuschalten beinhalten. Insoweit ergibt sich ein verbessertes Transientverhalten für das Kühlsystem.

Der erfindungsgemäß vorgeschlagene Kopplungszweig zur Unterbringung des Kopplungswärmeübertragers zweigt dabei über eine stromauf des Niedertemperatur-Ladeluftkühlers angeordnete Abzweigstelle von einem Vorlauf des Ladeluftkühlkreises ab, der vom Niedertemperatur-Kühlmittelkühler zum Niedertemperatur-Ladeluftkühler führt. Hierdurch wird erreicht, dass der Kopplungswärmeübertrager nicht in jedem Fall vom Niedertemperatur-Kühlmittel durchströmt werden muss, da er im Kopplungszweig quasi parallel zum Vorlauf angeordnet ist. Durch die Steuerbarkeit des Kopplungszweigs lässt sich auch hier auf einfache Weise der Kopplungswärmeübertrager zuschalten bzw. wegschalten. Ebenso sind auch hier grundsätzlich beliebige Zwischenstufen bzw. Stromaufteilungen denkbar. Die Unterbringung des Kopplungswärmeübertragers im Kopplungszweig hat außerdem den entscheidenden Vorteil, dass der Kopplungswärmeübertrager bei Teillast vom Ladeluftkühlkreis entkoppelt werden kann, so dass er nicht vom Niedertemperatur-Kühlmittel durchströmt wird, während er gleichzeitig mit Hilfe des Kältekreises gekühlt und auf einem entsprechend niedrigen Temperaturniveau gehalten werden kann, wozu er vom Kältemittel mehr oder weniger durchströmt wird. Für den Übergang zur Volllast bedeutet dies, dass sofort die Kühlleistung des Kopplungswärmeübertragers zur Verfügung steht, um das Niedertemperatur-Kühlmittel zu kühlen. Somit wird die thermische Trägheit des Kopplungswärmeübertragers aus dem Ladeluftkühlkreis herausgenommen, was die erforderliche Zeit für den transienten Zustand erheblich reduziert.

Bei Volllast kann die gesamte Kühlleistung des Kopplungswärmeübertragers zum Kühlen des Niedertemperatur-Kühlmittels genutzt werden, das anschließend insgesamt durch den Niedertemperatur-Ladeluftkühler geführt ist, um dort die Ladeluft zu kühlen.

Erfindungsgemäß enthält der Kopplungszweig einen Tieftemperatur-Ladeluftkühler zum Kühlen der Ladeluft und wird über eine Rückführstelle, welche in einen vom Niedertemperatur-Ladeluftkühler zum Niedertemperatur-Kühlmittelkühler führenden Rücklauf des Ladeluftkühlkreises angeordnet ist, zurückgeführt. In diesem Fall wird eine wenigstens zweistufige Kühlung der Ladeluft realisiert, nämlich zum einen im Niedertemperatur-Ladeluftkühler und zum anderen im Tieftemperatur-Ladeluftkühler. Im Volllastbetrieb kann das nur vom Niedertemperatur-Kühlmittelkühler gekühlte Niedertemperatur-Kühlmittel im Niedertemperatur-Ladeluftkühler die Ladeluft kühlen, während das durch den Niedertemperatur-Kühlmittelkühler und den Kopplungswärmeübertrager gekühlte Niedertemperatur-Kühlmittel im Tieftemperatur-Ladeluftkühler die Ladeluft kühlt. Hierdurch lässt sich die Ladeluft besonders effizient kühlen.

Zweckmäßig ist der Vorlauf zwischen der Abzweigstelle und dem Niedertemperatur-Ladeluftkühler gesteuert bzw. mit entsprechenden Ventilmitteln steuerbar konfiguriert, wodurch eine quasi beliebige Aufteilung des Niedertemperatur-Kühlmittels auf den Niedertemperatur-Ladeluftkühler und den Tieftemperatur-Ladeluftkühler bei Volllast einstellbar ist.

Bei einer vorteilhaften Weiterbildung kann der Tieftemperatur-Ladeluftkühler im Ladeluftpfad stromab des Niedertemperatur-Ladeluftkühlers angeordnet sein, so dass der Niedertemperatur-Ladeluftkühler eine Vorkühlung der Ladeluft bewirkt, während der Tieftemperatur-Ladeluftkühler eine Nachkühlung der Ladeluft bewirkt.

Bei einer anderen besonders vorteilhaften Weiterbildung können der Tieftemperatur-Ladeluftkühler und der Niedertemperatur-Ladeluftkühler in einem gemeinsamen Kühlerblock oder Wärmetauscher-Block ausgebildet sein, wodurch die Realisierung dieser Ausführungsform besonders preiswert wird. Ein typischer Wärmetauscher-Block besteht aus einer Vielzahl paralleler Rohre, die vom jeweiligen Kühlmittel durchströmbar sind und die zwischen sich Abstände aufweisen, die von der Ladeluft durchströmbar sind und in denen in der Regel eine Vielzahl von Lamellen und dergleichen Wärmeübertragungsstrukturen angeordnet sind. Einige dieser Rohre können nun innerhalb des Wärmetauscher-Blocks einen Niedertemperatur-Bereich definieren, der den Niedertemperatur-Ladeluftkühler bildet, während andere Rohre dann einen Tieftemperatur-Bereich im Wärmetauscher-Block definieren, der den Tieftemperatur-Ladeluftkühler bildet.

Entsprechend einer anderen vorteilhaften Weiterbildung kann der Kopplungszweig zwischen dem Kopplungswärmeübertrager und dem Tieftemperatur-Ladeluftkühler über eine gesteuerte bzw. mittels entsprechendem Ventilmittel steuerbare Verbindung mit dem Vorlauf fluidisch verbunden sein. Durch diese Maßnahme ist es für den Teillastbetrieb möglich, den Tieftemperatur-Ladeluftkühler bei abgekoppeltem Kopplungswärmeübertrager mit Niedertemperatur-Kühlmittel zu fluten, das vom Niedertemperatur-Kühlmittelkühler kommt, wodurch der Tieftemperatur-Ladeluftkühler und der Niedertemperatur-Ladeluftkühler auf demselben Temperaturniveau gehalten werden können. Hierdurch reduziert sich die thermische Masse des Tieftemperatur-Ladeluftkühlers von seiner Nassmasse auf seine Trockenmasse. Die Trockenmasse entspricht dem Wärmetauscher-Block ohne Kühlmittel, während die Nassmasse den Wärmetauscher-Block mit Kühlmittel umfasst. Für den Volllastbetrieb kann nun die Verbindung gesperrt werden, so dass dann ein vom Kopplungswärmeübertrager kommende Teil des Niedertemperatur-Kühlmittels den Tieftemperatur-Ladeluftkühler durchströmt, während ein am Kopplungswärmeübertrager vorbeigeführter Teil des Niedertemperatur-Kühlmittels dem Niedertemperatur-Ladeluftkühler zugeführt wird.

Entsprechend einer anderen vorteilhaften Ausführungsform kann ein Hochtemperatur-Kühlkreis vorgesehen sein, in dem ein flüssiges Hochtemperatur-Kühlmittel zirkuliert und der einen Hochtemperatur-Ladeluftkühler zum Kühlen der Ladeluft und einen Hochtemperatur-Kühlmittelkühler zum Kühlen des Hochtemperatur-Kühlmittels aufweist. Auf diese Weise lässt sich ebenfalls eine wenigstens zweistufige Kühlung der Ladeluft realisieren. In Verbindung mit dem weiter oben bereits genannten Tieftemperatur-Ladeluftkühler lässt sich sogar eine dreistufige Ladeluftkühlung realisieren.

Zweckmäßig ist der Hochtemperatur-Ladeluftkühler dabei im Ladeluftpfad stromauf des Niedertemperatur-Ladeluftkühlers angeordnet. Das Hochtemperatur-Kühlmittel liegt im normalen Betriebszustand der Brennkraftmaschine auf einem höheren Temperaturniveau als das Niedertemperatur-Kühlmittel. Dennoch kann über den Hochtemperatur-Ladeluftkühler eine Vorkühlung der Ladeluft realisiert werden, was die Kühlleistung des Kühlsystems insgesamt verbessert. Entsprechend einer vorteilhaften Weiterbildung kann vorgesehen sein, den Hochtemperatur-Ladeluftkühler und den Niedertemperatur-Ladeluftkühler baulich in einem gemeinsamen Kühler-Block zu integrieren. Dies kann bei einem Rohr-Wärmetauscher besonders einfach durch eine geeignete Zuordnung der einzelnen Rohre zum Niedertemperatur-Kühlkreis einerseits und zum Hochtemperatur-Kühlkreis andererseits erfolgen. Sofern auch ein Tieftemperatur-Ladeluftkühler vorgesehen ist, lässt sich auch ein Kühler-Block realisieren, in dem einheitlich die drei verschiedenen Kühler, nämlich Hochtemperatur-Ladeluftkühler, Niedertemperatur-Ladeluftkühler und Tieftemperatur-Ladeluftkühler integral ausgebildet sind. Bei einem Rohr-Wärmetauscher lässt sich dies wieder besonders einfach dadurch realisieren, dass einige der Rohre dem Hochtemperatur-Ladeluftkühler zugeordnet sind, einige andere Rohre dem Niedertemperatur-Ladeluftkühler zugeordnet sind und die übrigen Rohre dem Tieftemperatur-Ladeluftkühler zugeordnet sind.

Der Niedertemperatur-Ladeluftkühler kann generell vorzugsweise in einen Ladeluftverteiler integriert sein, der die von der jeweiligen Ladeeinrichtung kommende Ladeluft, insbesondere über separate Verbindungsleitungen, den einzelnen Brennräumen separat zuführt. Entsprechendes gilt für einen Kühler-Block, in den der Niedertemperatur-Ladeluftkühler und/oder der Tieftemperatur-Ladeluftkühler und/oder der Hochtemperatur-Ladeluftkühler integriert sind.

Beim Hochtemperatur-Kühlkreis kann es sich beispielsweise um einen Motorkühlkreis zum Kühlen eines Motorblocks der Brennkraftmaschine handeln. Auch ein derartiger Motorkühlkreis ist bei einer Brennkraftmaschine in der Regel ohnehin vorhanden, so dass der Aufwand zur Realisierung des Hochtemperatur-Ladeluftkühlers vergleichsweise gering ist. Der Hochtemperatur-Kühlmittelkühler ist dabei in üblicher Weise einem Kühlluftstrom ausgesetzt.

Der Hochtemperatur-Kühlmittelkühler des Hochtemperatur-Kühlkreises bzw. des Motorkühlkreises kann dabei zweckmäßig in einem Kühlluftpfad angeordnet sein, und zwar bevorzugt stromab des ebenfalls in diesem Kühlluftpfad angeordneten Niedertemperatur-Kühlmittelkühlers.

Die relativen Angaben "Niedertemperatur", "Tieftemperatur" und "Hochtemperatur" beziehen sich dabei auf die Ladeluft, so dass die Ladeluft im Hochtemperaturkühler zwar gekühlt wird, danach dennoch eine höhere Temperatur besitzt als nach dem Niedertemperatur-Ladeluftkühler, während sie nach dem Tieftemperatur-Ladeluftkühler eine niedere Temperatur besitzt als nach dem Niedertemperatur-Ladeluftkühler.

Bei einer anderen Ausführungsform kann in den Kopplungswärmeübertrager ein Latentwärmespeicher zum Kühlen des Niedertemperatur-Kühlmittels integriert sein. In Betriebsphasen, in denen der Kältekreis schon stark belastet ist, so dass er keine zusätzliche Wärme aus dem Niedertemperatur-Kühlkreis aufnehmen kann, ermöglicht der Latentwärmespeicher im Kopplungswärmeübertrager beim Wechsel von Teillast zu Volllast vorübergehend eine ausreichende Kühlung des Niedertemperatur-Kühlmittels.

Bei einer anderen Ausführungsform kann der Verdampfer in einem Gaspfad angeordnet sein, so dass ein Gasstrom durch den Verdampfer hindurchführt, wobei in den Verdampfer ein Latentwärmespeichermedium oder Latentmedium zum Kühlen des den Verdampfer durchströmenden Gasstroms integriert sein kann. Durch diese Bauweise kann bei Zuschaltung des Kopplungswärmetauschers der Einfluss auf die Gasaustrittstemperatur am Verdampfer minimiert und kurze Zeit abgefangen werden, so dass die Regelung des Kältekreises vereinfacht und keine Komforteinbußen verbucht werden müssen. Dieser dämpfende Effekt kann von einem Latentmedium realisiert werden.

Entsprechend einer besonders vorteilhaften Ausführungsform kann es sich beim Kältekreis um einen Klimakreis zum Kühlen eines einem Passagierraum des Fahrzeugs zuzuführenden Luftstroms handeln, so dass ein den Luftstrom führender Luftpfad durch den Verdampfer hindurchgeführt ist. Somit handelt es sich beim Kältekreis um einen bei modernen Fahrzeugen ohnehin vorhandenen Klimakreis, der zusätzlich zum Kühlen der Ladeluft genutzt werden kann.

Bei einer anderen vorteilhaften Ausführungsform kann der Niedertemperatur-Kühlmittelkühler in einem Kühlluftpfad angeordnet sein, so dass ein Kühlluftstrom durch den Niedertemperatur-Kühlmittelkühler hindurchgeführt ist, während der Kondensator stromauf des Niedertemperatur-Kühlmittelkühlers im Kühlluftpfad angeordnet ist. In diesem Fall wird der Kondensator somit direkt durch den Kühlluftstrom gekühlt. Grundsätzlich ist es möglich, Kondensator und Niedertemperatur-Kühlmittelkühler in einem gemeinsamen Wärmetauscher-Modul anzuordnen. Ferner ist es möglich, den zuvor genannten Hochtemperatur-Kühlmittelkühler des Hochtemperatur-Kühlkreises in demselben Kühlluftpfad anzuordnen, zweckmäßig stromab des Niedertemperatur-Kühlmittelkühlers. Auch hier ist theoretisch eine Integration in einem gemeinsamen Wärmetauscher-Modul des Hochtemperatur-Kühlmittelkühlers und des Niedertemperatur-Kühlmittelkühlers sowie optional des Kondensators denkbar.

Bei einer alternativen Ausführungsform kann der Niedertemperatur-Kühlmittelkühler wieder in einem Kühlluftpfad angeordnet sein, so dass ein Kühlluftstrom durch den Niedertemperatur-Kühlmittelkühler hindurchgeführt ist. Bei dieser alternativen Ausführungsform kann dagegen der Kondensator zur fluidisch getrennten, Wärme übertragenden Kopplung des Kältekreises mit dem Ladeluftkühlkreis stromauf des Niedertemperatur-Kühlmittelkühlers in den Ladeluftkühlkreis eingebunden sein. In diesem Fall ist der Kondensator nur noch indirekt mit dem Kühlluftstrom gekoppelt, nämlich über den Ladeluftkühlkreis. Durch diese Maßnahme entfällt ein großvolumiger, dem Kühlluftpfad auszusetzender Kondensator, da der vom flüssigen Niedertemperatur-Kühlmittel durchströmte indirekte Kondensator in dieser Bauweise deutlich kompakter realisierbar ist. Der durch Entfall des Kondensators im Frontend gewonnene Bauraum kann dann durch einen vergrößerten Niedertemperatur-Kühlmittelkühler ausgefüllt werden, so dass im Fahrzeug ein Niedertemperatur-Kühlmittelkreis mit erhöhter Leistung zur Verfügung steht, die je nach Anwendungsschwerpunkt flexibel auf die indirekten Rückkühlungskomponenten verteilt werden kann. Aufgrund z.T. komplementärer kritischer Hochlastszenarien von Kondensator und Niedertemperatur-Ladeluftkühler ergibt sich insgesamt ein in den Teilaspekten leistungsfähigeres Kühlsystem.

Das erfindungsgemäße Verfahren, mit dessen Hilfe sich ein Kühlsystem der vorstehend beschriebenen Art betreiben lässt, charakterisiert sich dadurch, dass der Ladeluftkühlkreis abhängig vom Kühlbedarf der Ladeluft zumindest zwischen einer ersten Kühlleistungsstufe und einer zweiten Kühlleistungsstufe umschaltbar ist, wobei in der ersten Kühlleistungsstufe der Kopplungswärmeübertrager nicht vom Niedertemperatur-Kühlmittel durchströmt wird. In der ersten Kühlleistungsstufe wird der Kopplungswärmeübertrager mit Hilfe des im Kältekreis vorhandenen Kältemittels gekühlt bzw. gekühlt gehalten. In der zweiten Kühlleistungsstufe wird der Niedertemperatur-Kühlmittelkühler und der Kopplungswärmeübertrager vom Niedertemperatur-Kühlmittel durchströmt. Auf diese Weise steht die Nassmasse des Kopplungswärmeübertragers für den Volllastbetrieb unmittelbar zur Verfügung, was die Ansprechzeit des Kühlsystems für einen Lastwechsel von Teillast auf Volllast extrem verkürzt. Die erste Kühlleistungsstufe realisiert keine oder eine relativ kleine Kühlleistung und ist der Teillast zugeordnet. Die zweite Kühlleistungsstufe erzeugt dagegen eine relativ große Kühlleistung und ist der Volllast zugeordnet.

Bei einer Weiterbildung ist vorgesehen, dass in der ersten Kühlleistungsstufe das Niedertemperatur-Kühlmittel durch den Niedertemperatur-Ladeluftkühler strömt. Hierbei kann eine Niedertemperatur-Pumpe, die im Ladeluftkühlkreis das Niedertemperatur-Kühlmittel antreibt, hinsichtlich ihrer Förderleistung reduziert werden. Alternativ kann die Niedertemperatur-Pumpe für die erste Kühlleistungsstufe ausgeschaltet werden.

Bei einer anderen Weiterbildung kann in der zweiten Kühlleistungsstufe ein erster Teilstrom des Niedertemperatur-Kühlmittels unter Umgehung des Kopplungswärmeübertragers durch den Niedertemperatur-Ladeluftkühler strömen, während ein zweiter Teilstrom des Niedertemperatur-Kühlmittels durch den Kopplungswärmeübertrager und danach durch den Tieftemperatur-Ladeluftkühler strömt. Hierdurch wird für die zweite Kühlleistungsstufe eine zweistufige Ladeluftkühlung mit Niedertemperatur-Ladeluftkühler und Tieftemperatur-Ladeluftkühler realisiert.

Gemäß einer anderen vorteilhaften Ausführungsform kann in der ersten Kühlleistungsstufe ein Gesamtstrom des Niedertemperatur-Kühlmittels den Kopplungswärmeübertrager umgehen und in zwei Teilströmen den Niedertemperatur-Ladeluftkühler und den Tieftemperatur-Ladeluftkühler parallel durchströmen. Hierdurch werden die Temperaturen von Niedertemperatur-Ladeluftkühler und Tieftemperatur-Ladeluftkühler angeglichen, um eine Vorkühlung sowohl des Niedertemperatur-Ladeluftkühler s als auch des Tieftemperatur-Ladeluftkühlers zu erzielen. Auch dies kann bei reduzierter Förderleistung der Niedertemperatur-Pumpe erfolgen.

Bei einer anderen vorteilhaften Ausführungsform kann für einen Umschaltvorgang von der ersten Kühlleistungsstufe in die zweite Kühlleistungsstufe zusätzliche Kühlleistung mittels wenigstens eines Latentwärmespeichers bereitgestellt werden. Ein derartiger Latentwärmespeicher lässt sich besonders einfach so auslegen, dass er im Bedarfsfall für eine vorbestimmte, vergleichsweise kurze Zeit, zum Beispiel für etwa 30 Sekunden, hinreichend Wärme aus dem Niedertemperatur-Kühlmittel entziehen kann, um die gewünschte Kühlleistung für den transienten Zustand bereitzustellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
Fig. 1 ein nicht erfindungsgemäßes Beispiel.
Fig. 2 bis 6 jeweils eine schaltplanartige Prinzipdarstellung eines erfindungsgemäßen Kühlsystems bei verschiedenen Ausführungsformen.

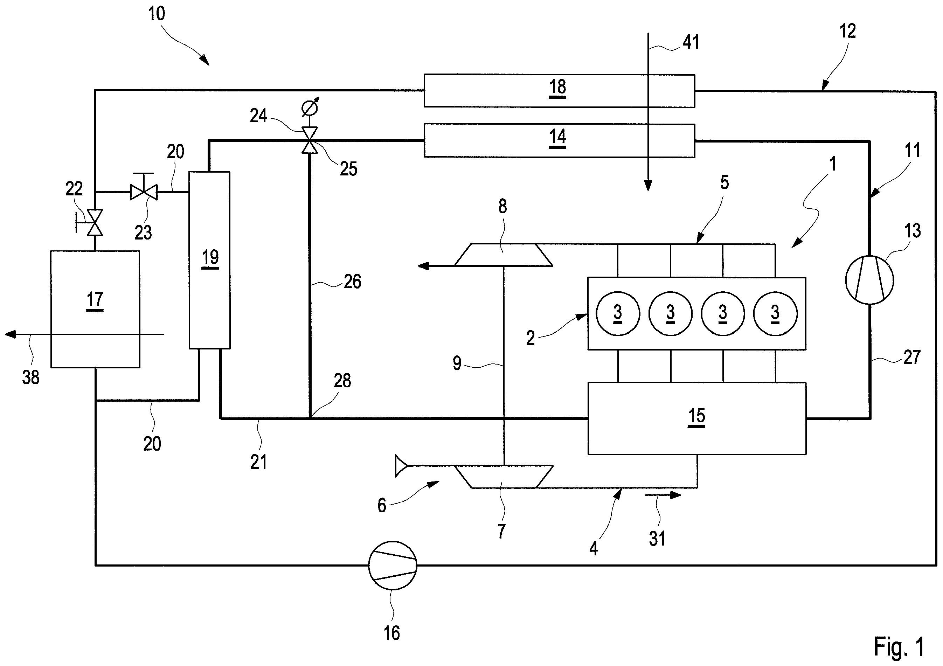

Entsprechend den Fig. 1 bis 6 umfasst eine Brennkraftmaschine 1 in üblicher Weise einen Motorblock 2 mit mehreren Brennräumen 3, die durch Zylinder gebildet sind, in denen Kolben hubverstellbar angeordnet sind. Die Brennkraftmaschine 1 ist zur Versorgung mit Frischluft mit einer Frischluftanlage 4 ausgestattet, die den Brennräumen 3 Frischluft zuführt. Zum Abführen von Abgas von den Brennräumen 3 ist die Brennkraftmaschine 1 mit einer Abgasanlage 5 ausgestattet. Die Brennkraftmaschine 1 ist als aufgeladene Brennkraftmaschine 1 konfiguriert und weist daher eine Ladeeinrichtung 6 auf, die hier durch einen Abgasturbolader gebildet ist, der ebenfalls mit 6 bezeichnet wird. Der Abgasturbolader 6 weist einen Verdichter 7 auf, der in der Frischluftanlage 4 angeordnet ist. Ferner weist der Abgasturbolader 6 eine Turbine 8 auf, die in der Abgasanlage 5 angeordnet ist. Der Verdichter 7 ist über eine Antriebswelle 9 mit der Turbine 8 antriebsverbunden.

Die Brennkraftmaschine 1 ist außerdem mit einem Kühlsystem 10 ausgestattet, das einen Ladeluftkühlkreis 11 und einen Kältekreis 12 umfasst. Der Ladeluftkühlkreis 11 enthält eine Niedertemperatur-Pumpe 13, einen Niedertemperatur-Kühlmittelkühler 14 und einen Niedertemperatur-Ladeluftkühler 15. Im Ladeluftkühlkreis 11 zirkuliert im Betrieb ein flüssiges Niedertemperatur-Kühlmittel, das hierzu von der Niedertemperatur-Pumpe 13 angetrieben wird. Im Unterschied dazu zirkuliert im Kältekreis 12 ein phasenwechselndes Kältemittel. Der Kältekreis 12 enthält einen Kompressor 16 zum Antreiben des Kältemittels, einen Verdampfer 17 zum Verdampfen des Kältemittels und einen Kondensator 18 zum Kondensieren des Kältemittels.

Das Kühlsystem 10 ist außerdem mit einem Kopplungswärmeübertrager 19 ausgestattet, der eine fluidisch getrennte Wärme übertragende Kopplung zwischen dem Ladeluftkühlkreis 11 und dem Kältekreis 12 ermöglicht. Hierzu ist der Kopplungswärmeübertrager 19 einerseits in einen Verdampferbypass 20 des Kältekreises 12 eingebunden, der den Verdampfer 17 umgeht. Andererseits ist der Kopplungswärmeübertrager 19 in einen Kopplungszweig 21 des Ladeluftkühlkreises 11 eingebunden. Die Aufteilung eines Kältemittelstroms auf den Verdampfer 17 und den Kopplungswärmeübertrager 19 ist mit Hilfe geeigneter Steuerventile 22, 23 steuerbar. Hierdurch ist zumindest der Verdampferbypass 20 steuerbar bzw. gesteuert. Der Kopplungszweig 21 kann ebenfalls gesteuert sein, und zwar beispielsweise mit Hilfe eines entsprechenden Steuerventils 24. Der Kopplungszweig 21 ist dabei über eine Abzweigstelle 25 von einem Vorlauf 26 des Ladeluftkühlkreises 11 abgezweigt. Der Vorlauf 26 führt vom Niedertemperatur-Kühlmittelkühler 14 zum Niedertemperatur-Ladeluftkühler 15. Im Unterschied dazu führt ein Rücklauf 27 des Ladeluftkühlkreises 11 vom Niedertemperatur-Ladeluftkühler 15 zum Niedertemperatur-Kühlmittelkühler 14. Die Abzweigstelle 25 ist somit stromauf des Niedertemperatur-Ladeluftkühlers 15 angeordnet.

Bei dem in Fig. 1 gezeigten nicht erfindungsgemäßen Beispiel ist der Kopplungszweig 21 über eine stromauf des Niedertemperatur-Ladeluftkühlers 15 und stromab der Abzweigstelle 25 angeordnete Rückführstelle 28 in den Vorlauf 21 des Ladeluftkühlkreises 11 rückgeführt.

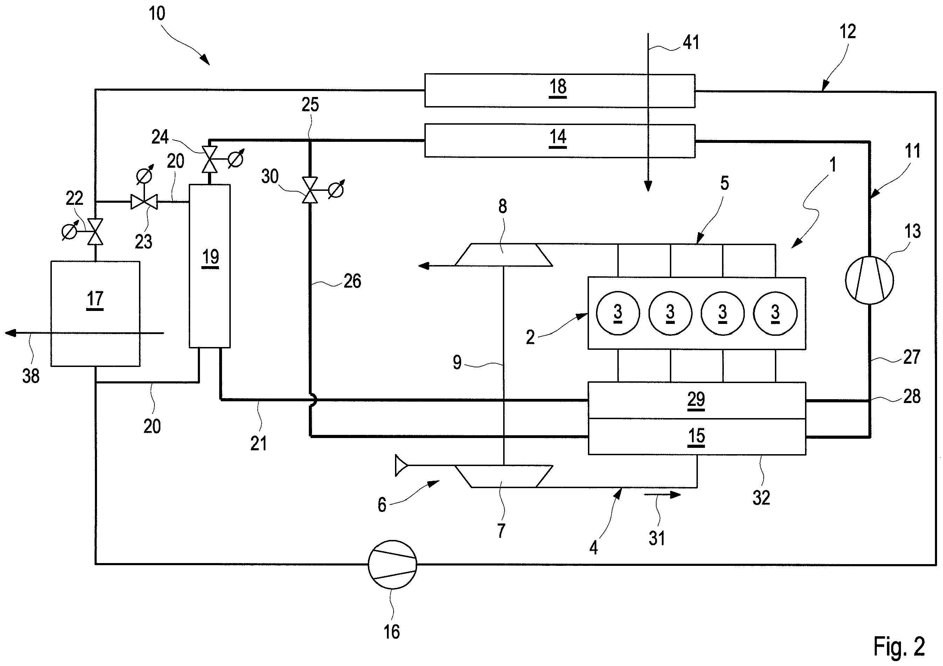

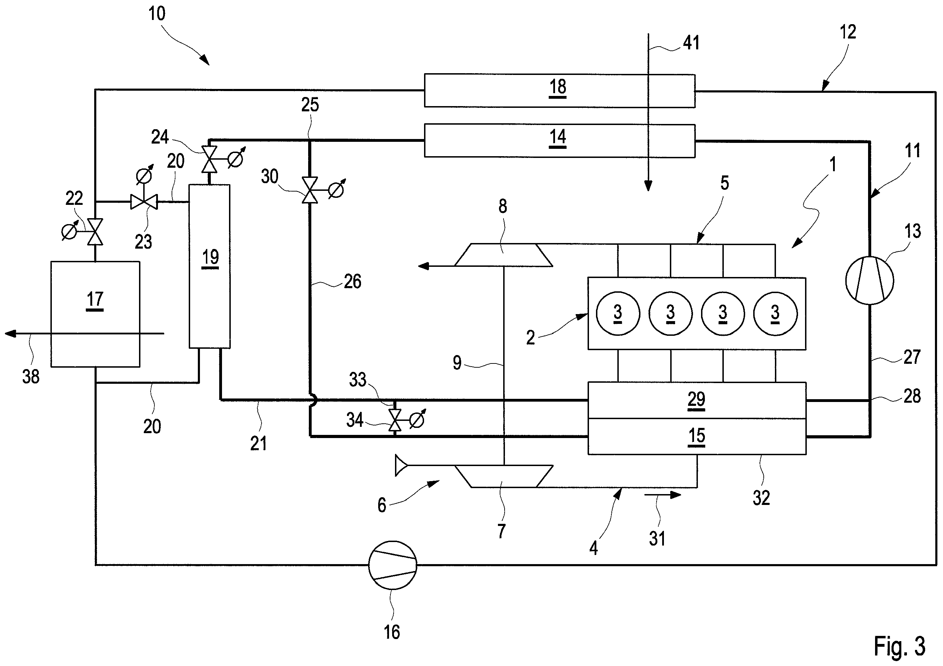

Bei den Ausführungsformen der Fig. 2 bis 6 ist dagegen die Rückführstelle 28 des Kopplungszweigs 21 am Rücklauf 27 angeordnet, also stromab des Niedertemperatur-Ladeluftkühlers 15. Bei diesen Ausführungsformen ist im Kopplungszweig 21 ein Tieftemperatur-Ladeluftkühler 29 angeordnet, der ebenfalls zum Kühlen der Ladeluft dient. In diesem Fall kann der Vorlauf 26 zwischen der Abzweigstelle 25 und dem Niedertemperatur-Ladeluftkühler 15 gesteuert sein, beispielsweise mittels eines entsprechenden Steuerventils 30. Der Tieftemperatur-Ladeluftkühler 29 ist in einem in der Frischluftanlage 4 geführten Ladeluftpfad 31 stromab des Niedertemperatur-Ladeluftkühlers 15 angeordnet. Zweckmäßig sind Tieftemperatur-Ladeluftkühler 29 und Niedertemperatur-Ladeluftkühler 15 in einem gemeinsamen Wärmetauscher-Block bzw. Kühler-Block 32 ausgebildet. Gemäß den Fig. 3 bis 6 kann bei verbesserten Ausführungsformen der in den Fig. 1 und 2 gezeigten Varianten eine Verbindung 33 vorgesehen sein, die den Kopplungszweig 21 zwischen dem Kopplungswärmeübertrager 19 und dem Tieftemperatur-Ladeluftkühler 29 fluidisch mit dem Vorlauf 26 verbindet. Die Verbindung 33 ist dabei gesteuert, wozu sie mit einem geeigneten Steuerventil 34 ausgestattet sein kann.

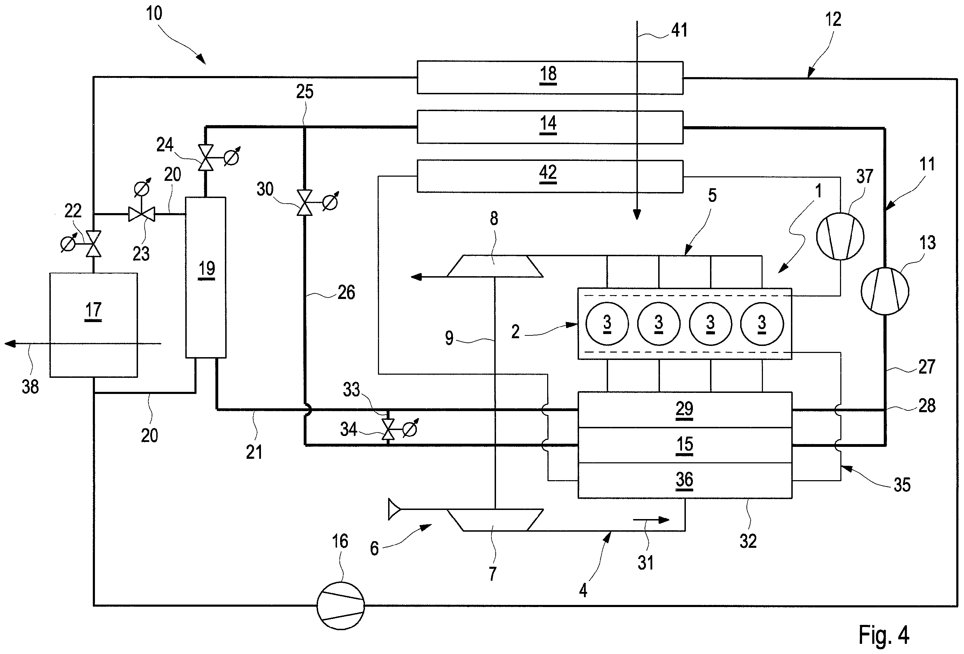

Die in den Fig. 4 bis 6 gezeigten Ausführungsformen unterscheiden sich von den in den Fig. 1 bis 3 gezeigten Ausführungsform durch einen Hochtemperatur-Kühlkreis 35, in dem ein flüssiges Hochtemperatur-Kühlmittel zirkuliert. Der Hochtemperatur-Kühlkreis 35 enthält einen Hochtemperatur-Ladeluftkühler 36 zum Kühlen der Ladeluft und einen Hochtemperatur-Kühlmittelkühler 37 zum Kühlen des Hochtemperatur-Kühlmittels.

Bei den hier gezeigten Beispielen handelt es sich beim Hochtemperatur-Kühlkreis 35 um einen Motorkühlkreis zum Kühlen des Motorblocks 2, wobei die hier gezeigte Verschaltung rein exemplarisch gewählt ist. Der Motorkühlkreis wird daher im Folgenden ebenfalls mit 35 bezeichnet. Insbesondere kann der Hochtemperatur-Ladeluftkühler 36 in einen separaten Zweig des Motorkühlkreises 35 integriert sein. Der Hochtemperatur-Ladeluftkühler 36 ist im Ladeluftpfad 31 stromauf des Niedertemperatur-Ladeluftkühlers 15 angeordnet. Zweckmäßig ist der Hochtemperatur-Ladeluftkühler 36 baulich in den Kühler-Block 32 integriert, in den auch der Niedertemperatur-Ladeluftkühler 15 und soweit vorhanden auch der Tieftemperatur-Ladeluftkühler 29 ausgebildet sind. Der Motorkühlkreis 35 enthält dabei in üblicher Weise eine Hochtemperatur-Pumpe 37 zum Antreiben des Hochtemperatur-Kühlmittels.

Bei den Ausführungsformen der Fig. 2 bis 6 dient der Kältekreis 12 zum Kühlen eines Luftstroms 38. Der Luftstrom 38 kann dabei einem Passagierraum des Fahrzeugs zugeführt werden. Dementsprechend handelt es sich beim Kältekreis 12 um einen Klimakreis, der im Folgenden ebenfalls mit 12 bezeichnet werden kann. Durch den Verdampfer 17 ist somit ein nicht näher bezeichneter Luftpfad hindurchgeführt, der den Luftstrom 38 führt.

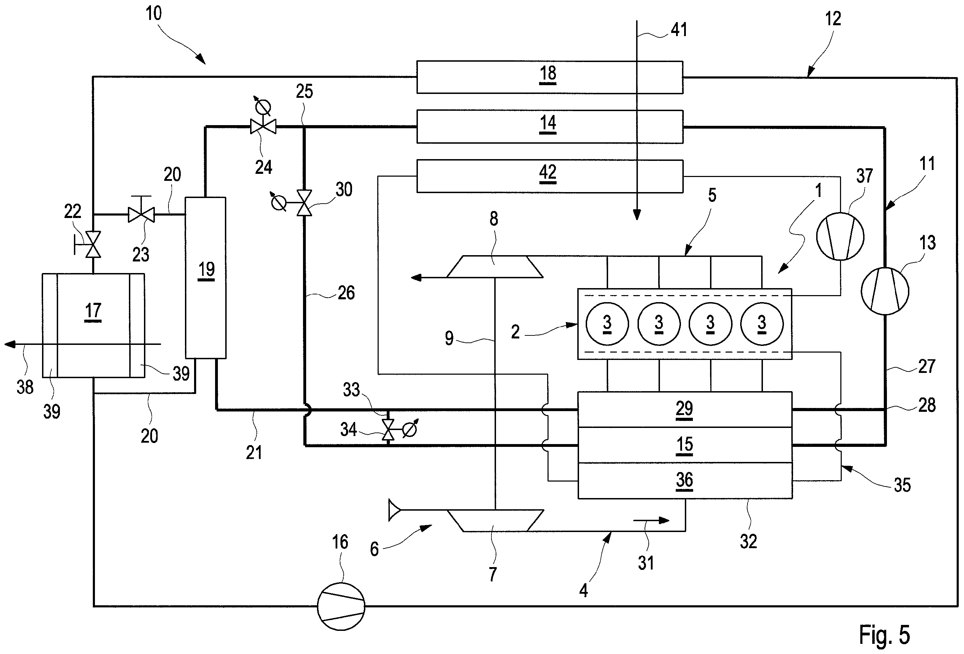

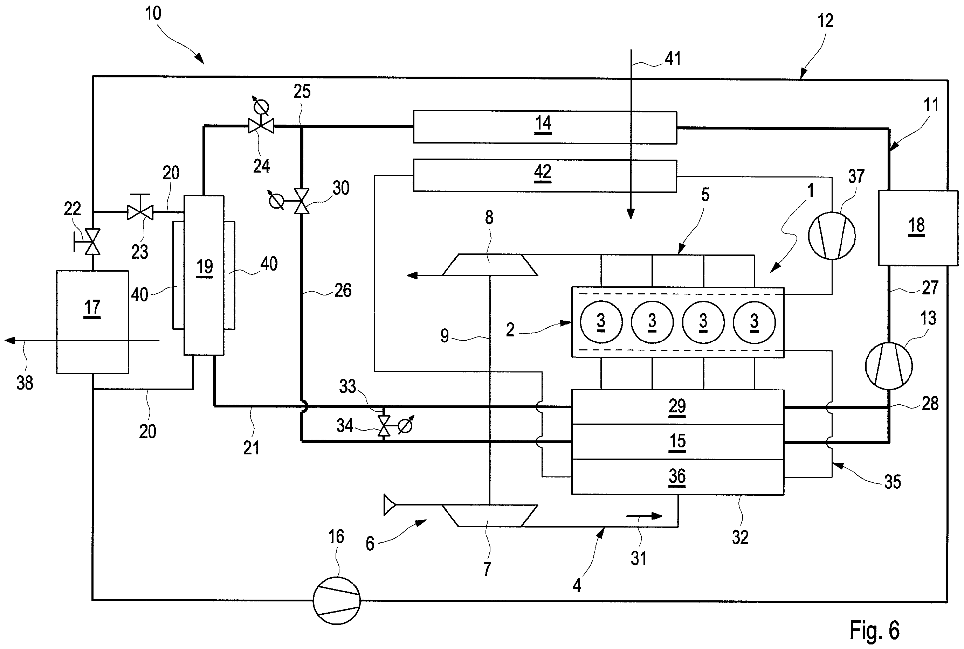

Bei der in Fig. 5 gezeigten Ausführungsform ist in den Verdampfer 17 ein Latentwärmespeicher 39 integriert, mit dessen Hilfe der den Verdampfer 17 durchströmende Luftstrom 38 gekühlt werden kann. Im Unterschied dazu zeigt Fig. 6 eine Ausführungsform, bei der in den Kopplungswärmeübertrager 19 ein Latentwärmespeicher 40 integriert ist, der zum Kühlen des Niedertemperatur-Kühlmittels dient. Es ist klar, dass grundsätzlich bei allen gezeigten Ausführungsformen ein derartiger Latentwärmespeicher 39 im Verdampfer 17 bzw. ein Latentwärmespeicher 40 im Kopplungswärmeübertrager 19 vorhanden sein kann.

Auch kann die durch das Latentmedium verursachte erhöhte thermische Trägheit der Teilkreise baulich in einer eigenständigen Komponente realisiert werden.

Bei den Ausführungsformen der Fig. 2 bis 6 ist der Niedertemperatur-Kühlmittelkühler 14 in einem Kühlluftpfad 41 angeordnet, derart, dass ein Kühlluftstrom durch den Niedertemperatur-Kühlmittelkühler 14 hindurchgeführt ist. Bei den Ausführungsformen der Fig. 1 bis 5 ist der Kondensator 18 stromauf des Niedertemperatur-Kühlmittelkühlers 14 in besagtem Kühlluftstrom bzw. Kühlluftpfad 41 angeordnet. Grundsätzlich kann auch der Hochtemperatur-Kühlmittelkühler 37 in diesem Kühlluftpfad 41 angeordnet sein, dann jedoch zweckmäßig stromab des Niedertemperatur-Kühlmittelkühlers 14.

Bei der in Fig. 6 gezeigten Ausführungsform ist der Kondensator 18 stromauf des Niedertemperatur-Kühlmittelkühlers 14 in den Ladeluftkühlkreis 11 eingebunden, um so eine fluidisch getrennte Wärmeübertragung zwischen dem Kältekreis 12 und dem Ladeluftkühlkreis 11 zu erzielen. Die Anordnung bzw. Ausgestaltung des Kondensators 18 gemäß Fig. 6 kann als indirekter Kondensator 18 bezeichnet werden, während die Anordnung bzw. Ausgestaltung des Kondensators 18 gemäß den Fig. 1 bis 5 als direkter Kondensator 18 bezeichnet werden kann. Der indirekte Kondensator 18 ist dabei in den Rücklauf 27 des Ladeluftkühlkreises 11 eingebunden.

Das hier vorgestellte Kühlsystem der Fig. 1 bis 6 kann wie folgt betrieben werden. Der Ladeluftkühlkreis 11 kann zumindest zwischen zwei verschiedenen Kühlerleistungsstufen umschaltbar sein. Dabei kann abhängig vom Kühlbedarf der Ladeluft beispielsweise zwischen einer ersten Kühlleistungsstufe und einer zweiten Kühlleistungsstufe umgeschaltet werden. Die zweite Kühlleistungsstufe stellt dabei mehr Kühlleistung zur Verfügung als die erste Kühlleistungsstufe. Beispielsweise kann die Ladeluft einen geringen Kühlbedarf besitzen, wenn die Brennkraftmaschine 1 nur im unteren Lastbereich, also bei Teillast betrieben wird. Ein hoher Kühlbedarf liegt dann vor, wenn die Brennkraftmaschine 1 in höherem und oberem Lastbereich, also bei Volllast betrieben wird.

In der ersten Kühlleistungsstufe wird der Kopplungswärmeübertrager 19 vom Niedertemperatur-Kühlmittel nicht durchströmt, wodurch er vom übrigen Ladeluftkühlkreis 11 fluidisch entkoppelt ist. Gleichzeitig wird der Kopplungswärmeübertrager 19 während der ersten Kühlleistungsstufe mit Hilfe des Kältekreises 12 gekühlt. In der zweiten Kühlleistungsstufe können nun der Niedertemperatur-Kühlmittelkühler 14 und der Kopplungswärmeübertrager 19 vom Niedertemperatur-Kühlmittel durchströmt werden. Hierdurch kann innerhalb kurzer Zeit viel Kühlleistung bereitgestellt werden, um bei einem Wechsel von Teillast in Volllast rasch die Ladeluft kühlen zu können.

Dabei kann grundsätzlich vorgesehen sein, dass in der ersten Kühlleistungsstufe das Niedertemperatur-Kühlmittel durch den Niedertemperatur-Ladeluftkühler 15 strömt, so dass also die Niedertemperatur-Pumpe 13 in Betrieb ist. Dabei kann die Niedertemperatur-Pumpe 13 eine vergleichsweise geringe bzw. eine reduzierte Förderleistung aufweisen. Ebenso ist es grundsätzlich möglich, während der ersten Kühlleistungsstufe die Niedertemperatur-Pumpe 13 vollständig auszuschalten.

In der zweiten Kühlleistungsstufe kann bei den Ausführungsformen der Fig. 2 bis 6 ein erster Teilstrom des Niedertemperatur-Kühlmittels unter Umgehung des Kopplungswärmeübertragers 19 durch den Niedertemperatur-Ladeluftkühler 15 strömen, während ein zweiter Teilstrom des Niedertemperatur-Kühlmittels durch den Kopplungswärmeübertrager 19 und danach durch den Tieftemperatur-Ladeluftkühler 29 strömt.

Die Ausführungsformen der Fig. 3 bis 6, bei denen die Verbindung 33 vorgesehen ist, ermöglichen für die erste Kühlleistungsstufe ein Aufteilen eines den Kopplungswärmeübertrager 19 umgehenden Gesamtstroms des Niedertemperatur-Kühlmittels in zwei Teilströme, die den Niedertemperatur-Ladeluftkühler 15 und den Tieftemperatur-Ladeluftkühler 29 parallel durchströmen.

Beim Umschalten von der ersten Kühlleistungsstufe in die zweite Kühlleistungsstufe kann zusätzliche Kühlleistung bei den in den Fig. 5 und 6 gezeigten Ausführungsformen mittels wenigstens eines Latentwärmespeichers 39 bzw. 40 bereitgestellt werden.

## Patentansprüche

1. Kühlsystem für eine aufgeladene Brennkraftmaschine (1), vorzugsweise in einem Kraftfahrzeug,
- mit einem Ladeluftkühlkreis (11), in dem ein Niedertemperatur-Kühlmittel zirkuliert und der einen Niedertemperatur-Ladeluftkühler (15) zum Kühlen der Ladeluft und einen Niedertemperatur-Kühlmittelkühler (14) zum Kühlen des Niedertemperatur-Kühlmittels aufweist,
- mit einem Kältekreis (12), in dem ein Kältemittel zirkuliert und der einen Verdampfer (17) zum Verdampfen des Kältemittels und einem Kondensator (18) zum Kondensieren des Kältemittels aufweist,
- mit einem Kopplungswärmeübertrager (19) zur fluidisch getrennten, Wärme übertragenden Kopplung des Ladeluftkühlkreises (11) mit dem Kältekreis (12), der einerseits in einem den Verdampfer (17) umgehenden Verdampferbypass (20) des Kältekreises (12) und andererseits in einem Kopplungszweig (21) des Ladeluftkühlkreises (11) angeordnet ist,
- wobei der Kopplungszweig (21) über eine Abzweigstelle (25) von einem vom Niedertemperatur-Kühlmittelkühler (14) zum Niedertemperatur-Ladeluftkühler (15) führenden Vorlauf (26) des Ladeluftkühlkreises (11) abzweigt,
- wobei der Kopplungszweig (21) einen Tieftemperatur-Ladeluftkühler (29) zum Kühlen der Ladeluft enthält,
**dadurch gekennzeichnet,**
- **dass** der Kopplungszweig (21) über eine Rückführstelle (28), welche in einem vom Niedertemperatur-Ladeluftkühler (15) zum Niedertemperatur-Kühlmittelkühler (14) führenden Rücklauf (27) des Ladeluftkühlkreises (11) angeordnet ist, rückgeführt wird.

2. Kühlsystem nach Anspruch 1,
**gekennzeichnet durch** eine Verbindung (33), die den Kopplungszweig (21) zwischen dem Kopplungswärmeübertrager (19) und dem Tieftemperatur-Ladeluftkühler (29) mit dem Vorlauf (26) fluidisch verbindet.

3. Kühlsystem nach Anspruch 1 oder 2,
**gekennzeichnet durch** einen Hochtemperatur-Kühlkreis (35), in dem ein Hochtemperatur-Kühlmittel zirkuliert und der einen Hochtemperatur-Ladeluftkühler (36) zum Kühlen der Ladeluft und einen Hochtemperatur-Kühlmittelkühler (42) zum Kühlen des Hochtemperatur-Kühlmittels aufweist.

4. Kühlsystem nach einem der Ansprüche 1 bis 3,
**dadurch gekennzeichnet,**
**dass** in den Kopplungswärmeübertrager (19) ein Latentwärmespeicher (40) zum Kühlen des Niedertemperatur-Kühlmittels integriert ist.

5. Kühlsystem nach einem der Ansprüche 1 bis 4,
**dadurch gekennzeichnet,**
- **dass** der Verdampfer (17) in einem Gaspfad angeordnet ist, so dass ein Gasstrom (38) durch den Verdampfer (17) hindurchführt,
- **dass** in den Verdampfer (17) ein Latentwärmespeicher (39) zum Kühlen des den Verdampfer (17) durchströmenden Gasstroms (38) integriert ist.

6. Kühlsystem nach einem der Ansprüche 1 bis 5,
**dadurch gekennzeichnet,**
**dass** der Kältekreis (12) ein Klimakreis zum Kühlen eines einem Passagierraum des Fahrzeugs zuzuführenden Luftstroms (38) ist, so dass ein den Luftstrom (38) führender Luftpfad durch den Verdampfer (17) hindurchgeführt ist.

7. Kühlsystem nach einem der Ansprüche 1 bis 6,
**dadurch gekennzeichnet,**
- **dass** der Niedertemperatur-Kühlmittelkühler (14) in einem Kühlluftpfad (41) angeordnet ist, so dass ein Kühlluftstrom durch den Niedertemperatur-Kühlmittelkühler (14) hindurchgeführt ist,
- **dass** der Kondensator (18) stromauf des Niedertemperatur-Kühlmittelkühlers (14) im Kühlluftpfad (41) angeordnet ist.

8. Kühlsystem nach einem der Ansprüche 1 bis 6,
**dadurch gekennzeichnet,**
- **dass** der Niedertemperatur-Kühlmittelkühler (14) in einem Kühlluftpfad (41) angeordnet ist, so dass ein Kühlluftstrom durch den Niedertemperatur-Kühlmittelkühler (14) hindurchgeführt ist,
- **dass** der Kondensator (18) zur fluidisch getrennten, Wärme übertragenden Kopplung des Kältekreises (12) mit dem Ladeluftkühlkreis (11) stromauf des Niedertemperatur-Kühlmittelkühlers (14) in den Ladeluftkühlkreis (11) eingebunden ist.

9. Verfahren zum Betreiben eines Kühlsystems (10) nach einem der Ansprüche 1 bis 8,
- bei dem der Ladeluftkühlkreis (11) abhängig vom Kühlbedarf der Ladeluft zumindest zwischen einer ersten Kühlleistungsstufe und einer zweiten Kühlleistungsstufe umschaltbar ist,
- bei dem in der ersten Kühlleistungsstufe der Kopplungswärmeübertrager (19) nicht vom Niedertemperatur-Kühlmittel durchströmt wird,
- bei dem in der ersten Kühlleistungsstufe der Kopplungswärmeübertrager (19) mit Hilfe des Kältekreises (11) gekühlt wird bzw. kalt gehalten wird, und
- bei dem in der zweiten Kühlleistungsstufe der Niedertemperatur-Kühlmittelkühler (14) und der Kopplungswärmeübertrager (19) vom Niedertemperatur-Kühlmittel durchströmt werden.

10. Verfahren nach Anspruch 9,
**dadurch gekennzeichnet,**
**dass** in der ersten Kühlleistungsstufe das Niedertemperatur-Kühlmittel durch den Niedertemperatur-Ladeluftkühler (15) strömt.

11. Verfahren nach Anspruch 9 oder 10,
**dadurch gekennzeichnet,**
**dass** in der zweiten Kühlleistungsstufe ein erster Teilstrom des Niedertemperatur-Kühlmittels unter Umgehung des Kopplungswärmeübertragers (19) durch den Niedertemperatur-Ladeluftkühler (15) strömt, während ein zweiter Teilstrom des Niedertemperatur-Kühlmittels durch den Kopplungswärmeübertrager (19) und danach durch den Tieftemperatur-Ladeluftkühler (29) strömt.

12. Verfahren nach einem der Ansprüche 9 bis 11,
**dadurch gekennzeichnet,**
**dass** in der ersten Kühlleistungsstufe ein Gesamtstrom des Niedertemperatur-Kühlmittels den Kopplungswärmeübertrager (19) umgeht und in zwei Teilströmen den Niedertemperatur-Ladeluftkühler (15) und den Tieftemperatur-Ladeluftkühler (29) parallel durchströmt.

13. Verfahren nach einem der Ansprüche 9 bis 12,
**dadurch gekennzeichnet,**
**dass** für einen Umschaltvorgang zum Umschalten von der ersten Kühlleistungsstufe in die zweite Kühlleistungsstufe zusätzliche Kühlleistung mittels wenigstens eines Latentwärmespeichers (39, 40) bereitgestellt wird.

## Claims

1. A cooling system for a supercharged internal combustion engine (1), preferably in a motor vehicle,
- with a charge air cooling circuit (11), in which a low-temperature coolant circulates and which has a low-temperature charge air cooler (15) for cooling the charge air and a low-temperature coolant cooler (14) for cooling the low-temperature coolant,
- with a refrigerant circuit (12), in which a refrigerant circulates and which has a vaporiser (17) for vaporising the refrigerant and a condenser (18) for condensing the refrigerant,
- with a coupling heat exchanger (19) for the fluidically separated, heat-transmitting coupling of the charge air cooling circuit (11) with the refrigerant circuit (12), which is arranged on the one hand in a vaporiser bypass (20) of the refrigerant circuit (12), bypassing the vaporiser (17), and on the other hand in a coupling branch (21) of the charge air cooling circuit (11),
- wherein the coupling branch (21) branches off via a branching-off point (25) from a feed (26) of the charge air cooling circuit (11) leading from the low-temperature coolant cooler (14) to the low-temperature charge air cooler (15),
- wherein the coupling branch (21) contains a cryogenic charge air cooler (29) for cooling the charge air,
**characterized in,**
- **that** the coupling branch (21) is directed back via a feedback point (28) which is arranged in a return (27) of the charge air cooling circuit (11) leading from the low-temperature charge air cooler (15) to the low-temperature coolant cooler (14).

2. The cooling system according to claim 1,
**characterized by** a connection (33), which fluidically connects with the feed (26) the coupling branch (21) between the coupling heat exchanger (19) and the cryogenic charge air cooler (29).

3. The cooling system according to claim 1 or 2,
**characterized by** a high temperature cooling circuit (35), in which a high temperature coolant circulates and which has a high temperature charge air cooler (36) for cooling the charge air, and a high temperature coolant cooler (42) for cooling the high temperature coolant.

4. The cooling system according to one of claims 1 to 3,
**characterized in that**
a latent heat storage unit (40) for cooling the low-temperature coolant is integrated into the coupling heat exchanger (19).

5. The cooling system according to one of claims 1 to 4,
**characterized in that**
- the vaporiser (17) is arranged in a gas path, so that a gas flow (38) leads through the vaporiser (17),
- a latent heat storage unit (39), for cooling the gas flow (38) flowing through the vaporiser (17), is integrated into the vaporiser (17).

6. The cooling system according to one of claims 1 to 5,
**characterized in that**
the refrigerant circuit (12) is an air-conditioning circuit for cooling an air flow (38) to be directed to a passenger compartment of the vehicle, so that an air path directing the airflow (38) is directed through the vaporiser (17).

7. The cooling system according to one of claims 1 to 6,
**characterized in that**
- the low-temperature coolant cooler (14) is arranged in a cooling air path (41), so that a cooling air flow is directed through the low-temperature coolant cooler (14),
- the condenser (18) is arranged upstream of the low-temperature coolant cooler (14) in the cooling air path (41).

8. The cooling system according to one of claims 1 to 6,
**characterized in that**
- the low-temperature coolant cooler (14) is arranged in a cooling air path (41), so that a cooling air flow is directed through the low-temperature coolant cooler (14),
- the condenser (18) for the fluidically separated, heat-transmitting coupling of the refrigerant circuit (12) with the charge air cooling circuit (11) is integrated into the charge air cooling circuit (11) upstream of the low-temperature coolant cooler (14).

9. A method for operating a cooling system (10) according to one of claims 1 to 8,
- in which the charge air cooling circuit (11) is able to be switched at least between a first cooling efficiency stage and a second cooling efficiency stage, dependent on the cooling requirement of the charge air,
- in which in the first cooling efficiency stage, the coupling heat exchanger (19) is not flowed through by the low-temperature coolant,
- in which in the first cooling efficiency stage, the coupling heat exchanger (19) is cooled or respectively is kept cold by means of the refrigerant circuit (11), and
- in which in the second cooling efficiency stage, the low-temperature coolant cooler (14) and the coupling heat exchanger (19) are flowed through by the low-temperature coolant.

10. The method according to claim 9,
**characterized in that**
in the first cooling efficiency stage, the low-temperature coolant flows through the low-temperature charge air cooler (15).

11. The method according to claim 9 or 10,
**characterized in that**
in the second cooling efficiency stage, a first partial flow of the low-temperature coolant flows through the low-temperature charge air cooler (15), bypassing the coupling heat exchanger (19), whilst a second partial flow of the low-temperature coolant flows through the coupling heat exchanger (19) and thereafter through the cryogenic charge air cooler (29).

12. The method according to one of claims 9 to 11,
**characterized in that**
in the first cooling efficiency stage a total flow of the low-temperature coolant bypasses the coupling heat exchanger (19) and flows in a parallel manner in two partial flows through the low-temperature charge air cooler (15) and the cryogenic charge air cooler (29).

13. The method according to one of claims 9 to 12,
**characterized in that**
for a changeover procedure for changing from the first cooling efficiency stage into the second cooling efficiency stage, additional cooling efficiency is provided by means of at least one latent heat storage unit (39, 40).

## Revendications

1. Système de refroidissement pour un moteur à combustion interne (1) rechargé, de préférence dans un véhicule automobile,
- comprenant un circuit de refroidissement d'air de suralimentation (11), dans lequel un liquide de refroidissement à basse température circule et qui présente un refroidisseur d'air de suralimentation à basse température (15) pour refroidir l'air de suralimentation et un refroidisseur de liquide de refroidissement à basse température (14) pour refroidir le liquide de refroidissement à basse température,
- comprenant un circuit réfrigérant (12), dans lequel un liquide réfrigérant circule et qui présente un évaporateur (17) pour évaporer le liquide réfrigérant et un condensateur (18) pour condenser le liquide réfrigérant,
- comprenant un échangeur de chaleur de couplage (19) pour coupler, de manière séparée sur le plan fluidique, avec une transmission de chaleur, le circuit de refroidissement d'air de suralimentation (11) au circuit réfrigérant (12), qui est disposé d'une part dans une dérivation d'évaporateur (20), contournant l'évaporateur (17), du circuit réfrigérant (12) et d'autre part dans un embranchement de couplage (21) du circuit de refroidissement d'air de suralimentation (11),
- dans lequel l'embranchement de couplage (21) réalise un embranchement par l'intermédiaire d'un emplacement d'embranchement (25) depuis un conduit d'arrivée (26), menant du refroidisseur de liquide de refroidissement à basse température (14) vers le refroidisseur d'air de suralimentation à basse température (15), du circuit de refroidissement d'air de suralimentation (11),
- dans lequel l'embranchement de couplage (21) contient un refroidisseur d'air de suralimentation à très basse température (29) pour refroidir l'air de suralimentation,
**caractérisé en ce**
- **que** l'embranchement de couplage (21) est ramené par l'intermédiaire d'un emplacement de retour (28), qui est disposé dans un conduit de retour (27) menant d'un refroidisseur d'air de suralimentation à basse température (15) vers un refroidisseur de liquide de refroidissement à basse température (14), du circuit de refroidissement d'air de suralimentation (11).

2. Système de refroidissement selon la revendication 1,
**caractérisé par** un système d'assemblage (33), qui relie de manière fluidique l'embranchement de couplage (21) entre l'échangeur de chaleur de couplage (19) et le refroidisseur d'air de suralimentation à très basse température (29) au conduit d'arrivée (26).

3. Système de refroidissement selon la revendication 1 ou 2,
**caractérisé par** un circuit de refroidissement à haute température (35), dans lequel un liquide de refroidissement à haute température circule et qui présente un refroidisseur d'air de suralimentation à haute température (36) pour refroidir l'air de suralimentation et un refroidisseur de liquide de refroidissement à haute température (42) pour refroidir le liquide de refroidissement à haute température.

4. Système de refroidissement selon l'une quelconque des revendications 1 à 3, **caractérisé en ce**
**qu'**un accumulateur de chaleur latente (40) pour refroidir le liquide de refroidissement à basse température est intégré dans l'échangeur de chaleur de couplage (19).

5. Système de refroidissement selon l'une quelconque des revendications 1 à 4, **caractérisé en ce**
- **que** l'évaporateur (17) est disposé dans un chemin de gaz de sorte qu'un flux de gaz (38) est guidé à travers l'évaporateur (17),
- **qu'**un accumulateur de chaleur latente (39) pour refroidir le flux de gaz (38) s'écoulant à travers l'évaporateur (17) est intégré dans l'évaporateur (17).

6. Système de refroidissement selon l'une quelconque des revendications 1 à 5, **caractérisé en ce**
**que** le circuit réfrigérant (12) est un circuit de climatisation pour refroidir un flux d'air (38) à amener à un espace de passager du véhicule de sorte qu'un chemin d'air guidant le flux d'air (38) est guidé à travers l'évaporateur (17).

7. Système de refroidissement selon l'une quelconque des revendications 1 à 6, **caractérisé en ce**
- **que** le refroidisseur de liquide de refroidissement à basse température (14) est disposé dans un chemin d'air de refroidissement (41) de sorte qu'un flux d'air de refroidissement est guidé à travers le refroidisseur de liquide de refroidissement à basse température (14),
- **que** le condensateur (18) est disposé dans le chemin d'air de refroidissement (41) en amont du refroidisseur de liquide de refroidissement à basse température (14).

8. Système de refroidissement selon l'une quelconque des revendications 1 à 6, **caractérisé en ce**
- **que** le refroidisseur de liquide de refroidissement à basse température (14) est disposé dans un chemin d'air de refroidissement (41) de sorte qu'un flux d'air de refroidissement est guidé à travers le refroidisseur de liquide de refroidissement à basse température (14),
- **que** le condensateur (18) est incorporé dans le circuit de refroidissement d'air de suralimentation (11) afin de coupler, de manière séparée sur le plan fluidique, avec une transmission de chaleur, le circuit réfrigérant (12) au circuit de refroidissement d'air de suralimentation (11) en amont du refroidisseur de liquide de refroidissement à basse température (14).

9. Procédé pour faire fonctionner un système de refroidissement (10) selon l'une quelconque des revendications 1 à 8,
- où le circuit de refroidissement d'air de suralimentation (11) peut être commuté en fonction du besoin de refroidissement de l'air de suralimentation au moins entre un premier niveau de puissance de refroidissement et un deuxième niveau de puissance de refroidissement,
- où l'échangeur de chaleur de couplage (19) n'est pas traversé par le liquide de refroidissement à basse température dans le premier niveau de puissance de refroidissement,
- où l'échangeur de chaleur de couplage (19) est refroidi ou est maintenu froid à l'aide du circuit réfrigérant (11) dans le premier niveau de puissance de refroidissement,
- où le refroidisseur de liquide de refroidissement à basse température (14) et l'échangeur de chaleur de couplage (19) sont traversés par le liquide de refroidissement à basse température dans le deuxième niveau de puissance de refroidissement.

10. Procédé selon la revendication 9,
**caractérisé en ce**
**que** le liquide de refroidissement à basse température s'écoule à travers le refroidisseur d'air de suralimentation à basse pression (15) dans le premier niveau de puissance de refroidissement.

11. Procédé selon la revendication 9 ou 10,
**caractérisé en ce**
**qu'**un premier flux partiel du liquide de refroidissement à basse température s'écoule à travers le refroidisseur d'air de suralimentation à basse température (15) en contournant l'échangeur de chaleur de couplage (19) dans le deuxième niveau de puissance de refroidissement, tandis qu'un deuxième flux partiel du liquide de refroidissement à basse température s'écoule à travers l'échangeur de chaleur de couplage (19) puis à travers le refroidisseur d'air de suralimentation à température très basse (29).

12. Procédé selon l'une quelconque des revendications 9 à 11,
**caractérisé en ce**
**qu'**un flux global du liquide de refroidissement à basse température contourne l'échangeur de chaleur de couplage (19) dans le premier niveau de puissance de refroidissement et traverse en parallèle en deux flux partiels le refroidisseur d'air de suralimentation à basse température (15) et le refroidisseur d'air de suralimentation à très basse température (29).

13. Procédé selon l'une quelconque des revendications 9 à 12,
**caractérisé en ce**
**qu'**une puissance de refroidissement supplémentaire est fournie au moyen d'au moins un accumulateur de chaleur latente (39, 40) pour une opération de commutation pour commuter du premier niveau de puissance de refroidissement dans le deuxième niveau de puissance de refroidissement.
